# EUROPEAN PATENT SPECIFICATION

(11) **EP 0 714 232 B1**
(45) Date of publication and mention of the grant of the patent: **16.08.2001**
(21) Application number: 95920309.2
(22) Date of filing: 12.06.1995
(51) Int. Cl.: A01J 5/017, A01K 1/12

(54) **AN IMPLEMENT FOR AUTOMATICALLY MILKING ANIMALS**
VORRICHTUNG ZUM AUTOMATISCHEN MELKEN VON TIEREN
OUTIL POUR TRAIRE AUTOMATIQUEMENT LES ANIMAUX

(30) Priority: 17.06.1994 NL 9400992
(43) Date of publication of application: 05.06.1996
(60) Divisional application: 00203958.4
(73) Proprietor: MAASLAND N.V., 3155 PD Maasland (NL)
(72) Inventor: VAN DER LELY, Olaf, CH-6312 Steinhausen (CH)
(74) Representative: Corten, Maurice Jean F.M.
(86) International application number: PCT/NL95/00207
(87) International publication number: WO 95/35028

(56) References cited:
- EP-A- 0 091 892
- EP-A- 0 551 957
- DE-A- 3 702 465
- NL-A- 8 602 505
- NL-A- 8 903 163

## Description

The present invention relates to a method according to the preamble of claim 1.

Such a method is known from EP-A-091892. This known method relates to milking loose housing cows which find their way individually to one or more feeding stalls where they are automatically identified and fed with the aid of a computer connected to the identification and feeding means. The computer is used for recording of the points of time each cow is milked and to activate a device in connection with the identification of a cow arriving at the feeding stall to eat, and provided that a predetermined time has passed after the preceding milking operation, which device is activated for automatic application of the milking means to the cow's udder and for starting a milking operation.

In particular in a loose housing system where the animals are allowed to move about freely and are able to report at any time at a milking parlour in order to be milked there, whilst they have been possibly lured by the fact that they may be given concentrates, there is a need for criteria which must be met in order that an animal which reports at the milking parlour can actually be milked. For it is not intended to milk an animal when it has been milked shortly before.

Accordingly, it is an object of the invention to provide an alternative method for automatically milking animals such that there are included criteria which indicate when an animal, after the last milking, is allowed to be milked again.

In accordance with the invention, the implement as described in the opening paragraph is characterized in that the defined numerical value corresponds to the number of animals which have been milked after the last milking of the animal in question. So, the number of animals that has been milked after the last milking of an animal which reports at the implement applies as a criterion. In case an insufficient number of other animals has been milked after the last milking, then the animal reporting at the milking parlour will not be milked and, consequently, be sent away or returned to the area where she has come from.

Although it is possible that there are provided separate counting means to keep count of the number of animals milked after the last milking of the animal reporting at the implement, it is preferable to record this number in the computer system. The numerical value against which this number is compared, in accordance with the invention, equals a proportion, e.g. approximately two thirds, of the number of animals which is to be milked in the implement. By coupling the defined numerical value to the number of animals to be milked in the implement, it is feasible to prevent that unintentionally certain animals are milked too frequently. On the other hand, this numerical value can also be defined individually for each animal and, for instance, be made conditional on the extent to which the lactation period of the animal reporting at the implement has elapsed. In that case, the numerical value at the beginning of the lactation may be equal to approximately half the number of animals which should be milked in the implement. By including in the computer system a lower numerical value as a criterion for particular animals, especially animals in the beginning of their respective lactation periods, it is brought about that these animals are milked more often than other animals.

When the condition on which the said signal is generated is fulfilled, it is possible to milk an animal which is in the milking parlour, and when this condition is not fulfilled, it is possible to send the animal which is in the milking parlour out of the milking parlour without milking it. However, it is preferable to take care that, on fulfilment of the condition on which the said signal is generated, this signal causes that the animal is admitted to a milking parlour. In other words, if this condition has not been fulfilled, the animal will not even be admitted to the milking parlour.

To be able to decide whether or not an animal reporting at the milking parlour is allowed to be milked, the animal shall have been identified, in order it can be established whether or not the criteria described hereinbefore are met. The animal recognition system is used for this purpose. Any recognisable characteristic of the animal itself or any means for recognition provided on the animal can be suitable for identification of the animal; however, in practice, a transponder attached to a strap round the neck of an animal is frequently used. This transponder is suitable for operation in conjunction with a sensor connected to the computer system. This sensor will be disposed in or in the vicinity of the milking parlour. This means that the animal, as soon as the animal has approached the milking parlour to a sufficiently short distance or has entered the selection box, is identified there, so that on account of one of the criteria mentioned hereinbefore and the data in the computer system it can be decided whether or not the animal is allowed to be milked. When use is made of a selection box which is entered by the animal before she is possibly admitted to the milking parlour, this sensor will preferably be disposed in the selection box. When the animal has entered the selection box and has been identified there, while subsequently it has been established that the condition to the generation of the mentioned signal is fulfilled, the animal will be admitted to the milking parlour in order to be milked there. When the condition to the generation of the mentioned signal is not fulfilled, the computer system will generate a different signal which causes that the animal is led from the selection box directly to the area where otherwise she would have been sent to via the milking parlour. In a concrete embodiment of the invention, for this purpose the selection box is provided with an entry door, a first exit door to the milking parlour and a second exit door giving access to that part of the area to which the exit door of the milking parlour, too, gives access. The first exit door can then be opened by means of the firstmentioned signal generated by the computer, while the second exit door can be opened by means of the other signal generated by the computer.

The selection box and the milking parlour are preferably arranged in a loose housing system; this may then be laid out such that an animal leaving the milking parlour or selection box has to cover a minimum walking distance to become able to report again at the milking parlour or the selection box.

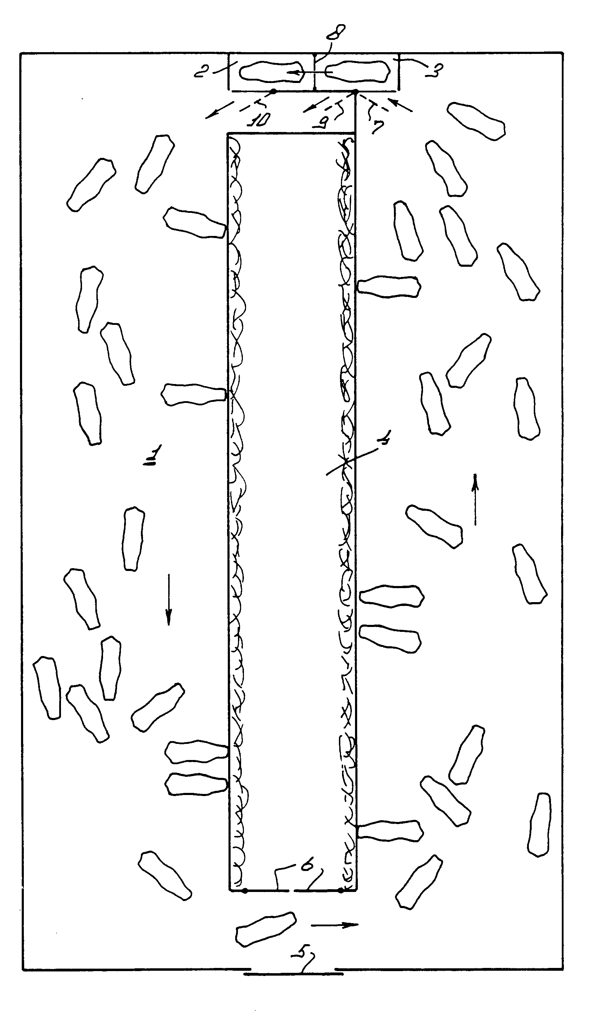

The invention will now be further explained with reference to the accompanying drawing, which shows a schematic representation of the implement according to the invention.

The drawing shows a loose housing system 1, in which there is disposed a milking parlour 2 and a selection box 3 along one of the short sides thereof. The loose housing 1 has been divided into two parts segregated by a feeding passage 4. Through doors 5 and 6, animal feedstuffs can be put into a manger or feed troughs along the sides of the feed passage. Furthermore, in the loose housing there may be optionally provided cow cubicles e.g. along the longitudinal sides of the loose housing system. It should be noticed that these cow cubicles are not included in the drawing.

The selection box 3 has an entry door 7, a first exit door 8 giving access to the milking parlour 2, and a second exit door 9 giving access to that part of the loose housing system 1 to which is also given access by the exit door 10 of the milking parlour 2. When the selection box 3 is free, an animal may enter it. Due to the fact that in the selection box 3 there is disposed a sensor which communicates with a (non-shown) computer system, and also that each animal bears a transponder attached to a neck strap, which transponder operates in conjunction with the sensor arranged in the selection box 3, an identification signal can be generated by the sensor and sent to the computer system, so that the animal can be identified. The combination of the transponder on the neck of each of the animals, the sensor in the selection box and the computer system constitutes a known per se animal recognition system. In the computer system, a criterion should be included which is determinative of the issue whether an animal in the milking parlour is to be milked or, in other words, whether an animal may be admitted from the selection box 3 to the milking parlour 2 to be milked there or that she is to be sent directly through the second exit door 9 to that part of the loose housing system to which the animal is also sent after its milking turn. When the animal passes through the second exit door 9 of the selection box 3 or the exit door 10 of the milking parlour, the animal should walk round the loose housing before she is able to report again at the selection box 3, whereby an animal not yet eligible for milking is prevented from again reporting immediately at the entrance of the selection box and re-entering it. For an animal may tend to do so, when she is given concentrates in the selection box or in the milking parlour.

The number of animals that has been milked since the latest milking turn of the animal reporting at the milking parlour may be taken as a criterion for being eligible for milking. This number which can be kept count of in the computer system is compared there against a predetermined numerical value. When the recorded number of animals exceeds this numerical value, the computer system issues a signal which denotes that the animal is allowed to be milked. This signal produced by the computer system consequently determines that the door 8 from the selection box to the milking parlour can be opened, provided that the milking parlour is free. When the recorded number of animals does not exceed the numerical value, the animal has reported too soon at the selection box and is not eligible for milking. The animal should then be sent away from the selection box through the exit door 9. This will take place on account of a different signal generated by the computer system, which signal is issued by the computer system in case that the recorded number of animals does not exceed the numerical value.

The criterium given here is of major importance when in the milking parlour there is provided a milking machine which is suitable for automatically connecting teat cups to the teats of an animal, for automatically milking the animal, and for automatically disconnecting the teat cups from the animal. Just in such a system, the farmer has no influence on the order in which the animals, which are indeed allowed to walk freely about in the loose housing system, go to the selection box in order to be directed from there to the milking parlour and to be milked there. Due to the fact that the animals can receive concentrates in the selection box or possibly in the milking parlour, too, the animals are lured towards the selection box or the milking parlour. On the other hand, the animals are not allowed to report again at the selection box for admission to the milking parlour within too short a time after they have been milked. By including the mentioned criterium in the computer system, a desired circulation of the animals through the loose housing system, the selection box and the milking parlour is realized.

The milking control system set forth hereinbefore is adaptable to the individual animals. When the number of animals milked after the latest milking turn of the animal reporting at the milking box is taken as a criterion, it is feasible by means of a suitably chosen numerical value, against which this number is compared, as explained before, to determine the limit as to which extent a certain animal can be milked more frequently than the other animals. On one hand, this numerical value may be fixed e.g. at a proportion of the number of animals which should be milked in the milking parlour in the ordinary course of events. The smaller this proportion is taken, the greater the probability of certain animals being milked more frequently than other animals. When it is intended to milk only particular animals more frequently than other animals, the numerical value can also be made dependent on a given animal and, more particularly, dependent on the stage of the lactation period in which the animal is. As a rule it applies that an animal which has calved recently can be milked more frequently than otherwise. The numerical value, against which the recorded number of animals is compared to check whether the newly calved-down animal is allowed to be milked, can then be fixed at a lower figure.

The invention is by no means limited to the exemplary embodiment of the invention set forth here, but it also relates to all kinds of modifications thereto, of course, as far as falling within the scope of the accompanying claims.

## Claims

1. A method for automatically milking animals, such as cows, by means of a milking machine being under the control of a computer system for automatically connecting teat cups to the teats of an animal, for automatically milking the animal, and for automatically disconnecting the teat cups from the animal, and by means of an animal recognition system being in communication with the computer system, whereby an animal is allowed to be milked again if a signal exceeding a defined numerical value is generated by the computer system, characterized in that the defined numerical value corresponds to the number of animals which have been milked after the last milking of the animal in question.

2. A method according to claim 1, characterized in that the number of animals milked after the last milking of an animal which reports at the implement is recorded in the computer system.

3. A method according to claim 1 or 2, characterized in that the numerical value equals a proportion of the number of animals which is to be milked in the implement.

4. A method according to claim 3, characterized in that the numerical value equals approximately two thirds of the number of animals which is to be milked in the implement.

5. A method according to claim 1, 2 or 3, characterized in that the numerical value can be defined individually for each animal and, for instance, be made conditional on the extent to which the lactation period of the animal reporting at the implement has elapsed.

6. A method according to claim 5, characterized in that the numerical value at the beginning of the lactation equals approximately half the number of animals to be milked in the implement.

7. A method according to any one of the preceding claims, characterized in that, on fulfilment of the condition on which the said signal is generated, this signal causes that the animal is admitted to a milking parlour (2).

8. A method according to any one of the preceding claims, characterized in that the animal recognition system comprises a sensor operating in conjunction with a transponder borne by the animals, which sensor is disposed in or in the vicinity of the implement.

9. A method according to claim 8, characterized in that the sensor is disposed in a selection (3) box which is entered by an animal prior to being capable of obtaining admission to a milking parlour (2).

10. A method according to claim 9, characterized in that, on non-fulfilment of the condition to the generation of the mentioned signal, the computer system generates a different signal which causes that the animal is led from the selection box (3) directly to the area where otherwise she would have been sent to via the milking parlour (2).

11. A method according to claim 10, characterized in that the selection box (3) is provided with an entry door (7), a first exit door (8) to the milking parlour (2) and a second exit door (9) giving access to that part of the area to which the exit door (10) of the milking parlour (2), too, gives access.

12. A method according to claim 11, characterized in that the first exit door (8) can be opened by means of the firstmentioned signal generated by the computer, while the second exit door (9) can be opened by means of the other signal generated by the computer.

13. A method according to any one of claims 9 to 11, characterized in that the selection box (3) and the milking parlour (2) are disposed in a loose housing system (1).

14. A method according to claim 13, characterized in that the loose housing system (1) is laid out such that an animal leaving the milking parlour (2) or selection box (13) has to cover a minimum walking distance to become able to report again at the milking parlour (2) or the selection box (3).

## Patentansprüche

1. Verfahren zum automatischen Melken von Tieren, wie z. B. Kühen, mit Hilfe einer Melkmaschine, die von einem Computersystem gesteuert wird, um automatisch Zitzenbecher an die Zitzen eines Tieres anzuschließen, um das Tier automatisch zu melken und um die Zitzenbecher automatisch von dem Tier abzunehmen, sowie mit Hilfe eines mit dem Computersystem verbundenen Tiererkennungssystems, wobei es einem Tier ermöglicht wird, erneut gemolken zu werden, wenn von dem Computersystem ein einen bestimmten numerischen Wert übersteigendes Signal erzeugt wird,
dadurch gekennzeichnet, daß der bestimmte numerische Wert der Anzahl von Tieren entspricht, die nach dem letzten Melken des betreffenden Tieres gemolken worden sind.

2. Verfahren nach Anspruch 1,
dadurch gekennzeichnet, daß die Anzahl von Tieren, die nach dem letzten Melken eines sich bei der Vorrichtung einfindenden Tieres gemolken worden sind, in dem Computersystem aufgezeichnet wird.

3. Verfahren nach Anspruch 1 oder 2,
dadurch gekennzeichnet, daß der numerische Wert einem Bruchteil der Anzahl von Tieren entspricht, die in der Vorrichtung zu melken ist.

4. Verfahren nach Anspruch 3,
dadurch gekennzeichnet, daß der numerische Wert etwa zwei Dritteln der Anzahl von Tieren entspricht, die in der Vorrichtung zu melken ist.

5. Verfahren nach Anspruch 1, 2 oder 3,
dadurch gekennzeichnet, daß der numerische Wert für jedes Tier einzeln definiert und z. B. von dem Maß abhängig gemacht werden kann, in dem die Laktationsperiode des sich in der Vorrichtung einfindenden Tieres fortgeschritten ist.

6. Verfahren nach Anspruch 5,
dadurch gekennzeichnet, daß der numerische Wert zu Beginn der Laktation etwa der Hälfte der Anzahl von Tieren entspricht, die in der Vorrichtung zu melken sind.

7. Verfahren nach einem der vorhergehenden Ansprüche,
dadurch gekennzeichnet, daß bei Erfüllung der Bedingung und Erzeugung des Signals dieses Signal bewirkt, daß dem Tier der Zutritt zu einem Melkstand (2) gestattet wird.

8. Verfahren nach einem der vorhergehenden Ansprüche,
dadurch gekennzeichnet, daß das Tiererkennungssystem einen Sensor umfaßt, der mit einem von den Tieren getragenen Transponder zusammenwirkt und in oder nahe der Vorrichtung angeordnet ist.

9. Verfahren nach Anspruch 8,
dadurch gekennzeichnet, daß der Sensor in einer Auswahlbox (3) angeordnet ist, die von einem Tier betreten wird, bevor es Zutritt zu einem Melkstand (2) erhalten kann.

10. Verfahren nach Anspruch 9,
dadurch gekennzeichnet, daß bei Nichterfüllen der Bedingung für die Erzeugung des erwähnten Signals das Computersystem ein unterschiedliches Signal erzeugt, das bewirkt, daß das Tier von der Auswahlbox (3) direkt in den Bereich geleitet wird, in den es sonst über den Melkstand (2) geschickt worden wäre.

11. Verfahren nach Anspruch 10,
dadurch gekennzeichnet, daß die Auswahlbox (3) eine Eingangstür (7), eine erste Ausgangstür (8) zum Melkstand (2) und eine zweite Ausgangstür (9) aufweist, die Zutritt zu dem Teil des Bereiches gewährt, zu dem auch die Ausgangstür (10) des Melkstandes (2) Zutritt gewährt.

12. Verfahren nach Anspruch 11,
dadurch gekennzeichnet, daß die erste Ausgangstür (8) mit Hilfe des erstgenannten, von dem Computer erzeugten Signals geöffnet werden kann, während die zweite Ausgangstür (9) mit Hilfe des anderen von dem Computer erzeugten Signals zu öffnen ist.

13. Verfahren nach einem der Ansprüche 9 bis 11,
dadurch gekennzeichnet, daß die Auswahlbox (3) und der Melkstand (2) in einem Laufstallsystem (1) angeordnet sind.

14. Verfahren nach Anspruch 13,
dadurch gekennzeichnet, daß das Laufstallsystem (1) derart ausgelegt ist, daß ein Tier, das den Melkstand (2) oder die Auswahlbox (3) verläßt, eine Mindestlaufstrecke zurücklegen muß, um sich erneut bei dem Melkstand (2) oder der Auswahlbox (3) einfinden zu können.

## Revendications

1. Procédé de traite automatique d'animaux, tels que des vaches, par l'intermédiaire d'une machine de traite commandée par un système informatisé pour connecter automatiquement des gobelets trayeurs aux trayons d'un animal, pour traire automatiquement l'animal, et pour déconnecter automatiquement les gobelets trayeurs de l'animal, et par l'intermédiaire d'un système de reconnaissance d'animal communiquant avec le système informatisé, de sorte qu'on permet à un animal d'être trait à nouveau si un signal dépassant une valeur numérique définie est créé par le système informatisé, caractérisé en ce que la valeur numérique définie correspond au nombre d'animaux qui ont été traits après la dernière traite de l'animal en question.

2. Procédé selon la revendication 1, caractérisé en ce que le nombre d'animaux traits après la dernière traite d'un animal qui se porte au niveau de l'installation est enregistré dans le système informatisé.

3. Procédé selon la revendication 1 ou 2, caractérisé en ce que la valeur numérique est égale à une proportion du nombre d'animaux qui doivent être traits dans l'installation.

4. Procédé selon la revendication 3, caractérisé en ce que la valeur numérique est égale approximativement à deux tiers du nombre d'animaux qui doivent être traits dans l'installation.

5. Procédé selon la revendication 1, 2 ou 3, caractérisé en ce que la valeur numérique peut être définie individuellement pour chaque animal et peut par exemple dépendre du degré selon lequel la période de lactation de l'animal se portant au niveau de l'installation s'est écoulée.

6. Procédé selon la revendication 5, caractérisé en ce que la valeur numérique au début de la lactation est égale approximativement à la moitié du nombre d'animaux devant être traits dans l'installation.

7. Procédé selon l'une quelconque des revendications précédentes, caractérisé en ce que, lorsque la condition selon laquelle ledit signal est créé est remplie, ce signal entraîne que l'animal est admis dans le box de traite (2).

8. Procédé selon l'une quelconque des revendications précédentes, caractérisé en ce que le système de reconnaissance d'animal comporte un capteur fonctionnant conjointement avec un transpondeur porté par les animaux, lequel capteur est disposé dans l'installation ou à proximité de celle-ci.

9. Procédé selon la revendication 8, caractérisé en ce que le capteur est disposé dans un box de sélection (3) dans lequel un animal entre avant de pouvoir obtenir son admission dans le box de traite (2).

10. Procédé selon la revendication 9, caractérisé en ce que, lorsque la condition de création du signal mentionné n'est pas remplie, le système informatisé crée un signal différent qui entraîne que l'animal est emmené du box de sélection (3) directement jusqu'à la zone où il aurait sinon été envoyé via le box de traite (2).

11. Procédé selon la revendication 10, caractérisé en ce que le box de sélection (3) est muni d'une porte d'entrée (7), d'une première porte de sortie (8) vers le box de traite (2) et d'une seconde porte de sortie (9) donnant accès à cette partie de la zone à laquelle la porte de sortie (10) du box de traite (2) donne également accès.

12. Procédé selon la revendication 11, caractérisé en ce que la première porte de sortie (8) peut être ouverte par l'intermédiaire du signal mentionné en premier créé par l'ordinateur, tandis que la seconde porte de sortie (9) peut être ouverte par l'intermédiaire de l'autre signal créé par l'ordinateur.

13. Procédé selon l'une quelconque des revendications 9 à 11, caractérisé en ce que le box de sélection (3) et le box de traite (2) sont disposés dans un système de bâtiment ouvert (1).

14. Procédé selon la revendication 13, caractérisé en ce que le système de bâtiment ouvert (1) est disposé de telle sorte qu'un animal quittant le box de traite (2) ou le box de sélection (3) doit couvrir une distance de marche minimum pour pouvoir se porter à nouveau au niveau du box de traite (2) ou du box de sélection (3).
